# EUROPEAN PATENT APPLICATION

(11) **EP 3 324 509 A1**
(43) Date of publication of application: **23.05.2018**
(21) Application number: 16834646.8
(22) Date of filing: 09.08.2016
(51) Int. Cl.: H02J 3/38

(54) **POWER SUPPLY SYSTEM AND POWER SUPPLY METHOD**

(30) Priority: 10.08.2015 CN 201510487821
(71) Applicant: Huawei Technologies Co., Ltd., Longgang District Shenzhen, Guangdong 518129 (CN)
(72) Inventor: XIN, Kai, Shenzhen Guangdong 518129 (CN); GUO, Haibin, Shenzhen Guangdong 518129 (CN); GAO, Yongbing, Shenzhen Guangdong 518129 (CN)
(74) Representative: Gill Jennings & Every LLP
(86) International application number: PCT/CN2016/094228
(87) International publication number: WO 2017/025022

(57) **Abstract**

The present invention provides a low voltage ride-through control system for a multi-inverter grid-connected power converter, including: a photovoltaic array and an inverter. The inverter includes a DC/DC conversion unit and a DC/AC inversion unit connected to an output end of the DC/DC conversion unit, an input end of the DC/DC conversion unit is connected to an output end of the photovoltaic array, and the inverter is connected to a power grid at a grid-connected point. The inverter further includes a low voltage ride-through detection unit and a low voltage ride-through control unit. The low voltage ride-through detection unit is configured to detect an amplitude of a voltage of the power grid at the grid-connected point, to determine whether to trigger low voltage ride-through. The low voltage ride-through control unit is configured to lower an input voltage of the DC/DC conversion unit when it is determined to trigger the low voltage ride-through, to lower an output voltage of the photovoltaic array, so that the output voltage of the photovoltaic array is less than a voltage of maximum power point tracking when the inverter operates in a steady state.

## Description

### TECHNICAL FIELD

The present invention relates to the field of electric power, and in particular, to a low voltage ride-through control system and method for a multi-inverter grid-connected power converter.

### BACKGROUND

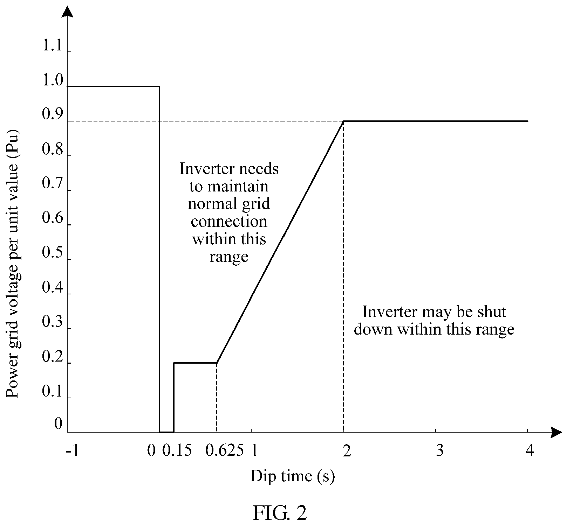

Along with popularization of photovoltaic power generation, more large-scale photovoltaic stations are established, and higher requirements are imposed on grid connection characteristics of photovoltaic stations due to factors such as a field environment. As an important indicator for ensuring operation of a power grid, a low voltage ride-through capability of a photovoltaic inverter attracts more attention, and grid connection standards in various countries all have strict requirements on low voltage ride-through. Low voltage ride-through (LVRT) means that when a voltage dip occurs at a grid-connected point of a photovoltaic station due to an incident or disturbance of a power system, for example, due to a short circuit of the power system or a sudden change in a load power, the photovoltaic station can continuously operate in a grid-connected state within a particular voltage dip range and time range, thereby avoiding propagation of a power grid fault. In addition, a photovoltaic grid-connected inverter has a normal operating voltage range, and the inverter is shut down in a case of an excessively low voltage. Therefore, low voltage ride-through is proposed in the standards, to require an inverter to continuously operate for a period of time at a low voltage and to be capable of generating an active power and a reactive power, so as to provide support for power grid recovery, thereby riding through the low voltage duration. FIG. 2 in the accompanying drawings of the specification shows a requirement on low voltage ride-through in a grid connection standard in China. When low voltage ride-through occurs, a bus voltage increases to an open-circuit voltage Voc of a photovoltaic panel. When an active current or a reactive current suddenly changes due to a surge after recovery from low voltage ride-through, that is, due to a sudden increase in a power grid voltage, bus overvoltage protection is likely triggered. Consequently, an excessively high capacitance and voltage leads to triggering of the protection or device damage.

In addition, in a process of low voltage ride-through, under a relatively high bus voltage, a power converter needs to generate a relatively high reactive current, and a relatively large bus capacitance value is required, so as to ensure normal operation in a steady state during low voltage ride-through. However, relatively high bus capacitance increases system costs.

### SUMMARY

The present invention provides a low voltage ride-through control method for a multi-inverter grid-connected power converter, so as to overcome a prior-art problem that a power converter is unstable because bus overvoltage protection or device damage is likely caused, and a prior-art problem that system costs are increased because a relatively large bus capacitance value is required. The method can effectively lower the bus capacitance value and enhance stability of low voltage ride-through.

A first aspect provides a low voltage ride-through control system for a multi-inverter grid-connected power converter, including: a photovoltaic array and an inverter, where the inverter includes a DC/DC conversion unit and a DC/AC inversion unit connected to an output end of the DC/DC conversion unit, an input end of the DC/DC conversion unit is connected to an output end of the photovoltaic array, the inverter is connected to a power grid at a grid-connected point, and the grid-connected point is a point at which a photovoltaic power station is connected to the power grid; and
the inverter further includes a low voltage ride-through detection unit and a low voltage ride-through control unit, where
the low voltage ride-through detection unit is configured to detect an amplitude of a voltage of the power grid at the grid-connected point, to determine whether to trigger low voltage ride-through; and
the low voltage ride-through control unit is connected to the low voltage ride-through detection unit and is configured to lower an input voltage of the DC/DC conversion unit when the low voltage ride-through detection unit determines to trigger the low voltage ride-through, to lower an output voltage of the photovoltaic array, so that the output voltage of the photovoltaic array is less than a voltage of maximum power point tracking when the inverter operates in a steady state.

In a first possible implementation manner of the first aspect, the low voltage ride-through control unit is further configured to lower an output voltage of the DC/DC conversion unit when the low voltage ride-through detection unit determines to trigger the low voltage ride-through, to lower an increase value of a voltage of a bus caused by an instantaneous increase in the voltage of the power grid after recovery from the low voltage ride-through, so as to protect a bus device or avoid triggering bus overvoltage protection, where the bus is configured to connect the DC/DC conversion unit and the DC/AC inversion unit, and the bus device is a device connected in series to the bus.

With reference to the first aspect, in a second possible implementation manner, that the low voltage ride-through control unit is further configured to lower an output voltage of the DC/DC conversion unit when the low voltage ride-through detection unit determines to trigger the low voltage ride-through includes: the low voltage ride-through control unit is specifically configured to:
lower the input voltage of the DC/DC conversion unit, so as to lower the output voltage of the DC/DC conversion unit.

With reference to the first or the second possible implementation manner of the first aspect, in a third possible implementation manner, that the low voltage ride-through control unit is further configured to lower an output voltage of the DC/DC conversion unit, to lower an increase value of a voltage of a bus caused by an instantaneous increase in the voltage of the power grid after recovery from the low voltage ride-through, so as to protect a bus device or avoid triggering bus overvoltage protection, where the bus is configured to connect the DC/DC conversion unit and the DC/AC inversion unit includes: the low voltage ride-through control unit is specifically configured to:
set a voltage range for normal operation of the bus according to the voltage of maximum power point tracking when the inverter operates in the steady state and power grid voltage information, and control the increased voltage of the bus within the voltage range for normal operation of the bus.

With reference to any one of the first aspect to the third possible implementation manner of the first aspect, in a fourth possible implementation manner, that the low voltage ride-through detection unit is configured to detect an amplitude of a voltage of the power grid at the grid-connected point, to determine whether to trigger low voltage ride-through includes: the low voltage ride-through detection unit is specifically configured to:
detect the amplitude of the voltage of the power grid, and trigger the low voltage ride-through when a change in the amplitude exceeds a preset range.

A second aspect provides a low voltage ride-through control method for a multi-inverter grid-connected power converter, including:
detecting an amplitude or a phase of a voltage of a power grid at a grid-connected point, to determine whether to trigger low voltage ride-through, where the grid-connected point is a point at which a photovoltaic power station is connected to the power grid; and
lowering an input voltage of a DC/DC conversion unit when it is determined to trigger the low voltage ride-through, to lower an output voltage of a photovoltaic array, so that the output voltage of the photovoltaic array is less than a voltage of maximum power point tracking when an inverter operates in a steady state.

In a first possible implementation manner of the second aspect, the method further includes: lowering an output voltage of the DC/DC conversion unit when it is determined to trigger the low voltage ride-through, to lower an increase value of a voltage of a bus caused by an instantaneous increase in the voltage of the power grid after recovery from the low voltage ride-through, so as to protect a bus device or avoid triggering bus overvoltage protection, where the bus is configured to connect the DC/DC conversion unit and a DC/AC inversion unit, and the bus device is a device connected in series to the bus.

With reference to the second aspect, in a second possible implementation manner, the lowering an output voltage of the DC/DC conversion unit specifically includes:
lowering the input voltage of the DC/DC conversion unit, so as to lower the output voltage of the DC/DC conversion unit.

With reference to any one of the second aspect to the second possible implementation manner of the second aspect, in a third possible implementation manner, the lowering an output voltage of the DC/DC conversion unit, to lower an increase value of a voltage of a bus caused by an instantaneous increase in the voltage of the power grid after recovery from the low voltage ride-through, so as to protect a bus device or avoid triggering bus overvoltage protection, where the bus is configured to connect the DC/DC conversion unit and a DC/AC inversion unit, and the bus device is a device connected in series to the bus, specifically includes:
setting a voltage range for normal operation of the bus according to the voltage of maximum power point tracking when the inverter operates in the steady state and power grid voltage information, and controlling the voltage of the bus within the voltage range for normal operation of the bus.

With reference to any one of the second aspect to the third possible implementation manner of the second aspect, in a fourth possible implementation manner, the detecting an amplitude of a voltage of a power grid at a grid-connected point, to determine whether to trigger low voltage ride-through specifically includes:
detecting the amplitude of the voltage of the power grid at the grid-connected point, and triggering the low voltage ride-through when a change in the amplitude exceeds a preset range.

In the low voltage ride-through control system for a multi-inverter grid-connected power inverter that is provided in the present invention, the input voltage of the DC/DC conversion unit is lowered, to lower the output voltage and an output power of the photovoltaic array, and the output voltage of the photovoltaic array and the input and output voltages of the inverter are adjusted, so that a power balance is achieved among the photovoltaic array, the inverter, and the grid-connected point of the power grid, and the inverter can implement low voltage ride-through and can overcome a prior-art problem that a power converter is unstable because bus overvoltage protection or bus device damage is likely caused, and a prior-art problem that system costs are increased because a relatively large bus capacitance value is required. The method can effectively lower the bus capacitance value and enhance stability of low voltage ride-through.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show some embodiments of the present invention, and a person of ordinary skill in the art may still derive other drawings from these accompanying drawings without creative efforts.
FIG. 1 is a structural diagram of a low voltage ride-through control system for a multi-inverter grid-connected power converter according to an embodiment of the present invention;
FIG. 2 is a schematic diagram of a requirement on low voltage ride-through in a grid connection standard in China;
FIG. 3 is a schematic diagram of changes in a current, a voltage, and a power of a photovoltaic array during low voltage ride-through of the photovoltaic array according to the present invention;
FIG. 4 is a circuit diagram of a low voltage ride-through control system for a multi-inverter grid-connected power converter according to an embodiment of the present invention;
FIG. 5 is a control diagram of a low voltage ride-through control system for a multi-inverter grid-connected power converter according to an embodiment of the present invention;
FIG. 6 is a flowchart of a low voltage ride-through control method for a multi-inverter grid-connected power converter according to an embodiment of the present invention; and
FIG. 7 is a flowchart of another low voltage ride-through control method for a multi-inverter grid-connected power converter according to an embodiment of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

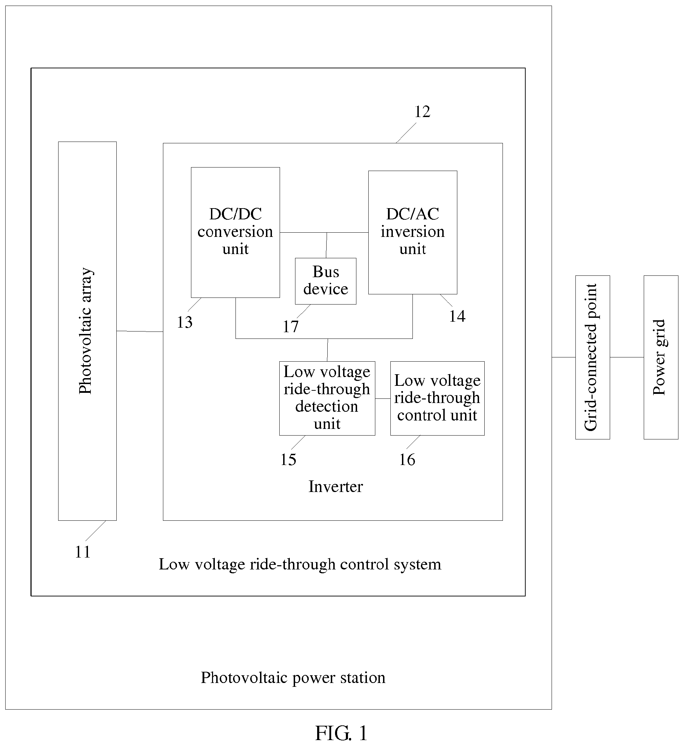

Referring to FIG. 1, FIG. 1 is a structural diagram of a low voltage ride-through control system for a multi-inverter grid-connected power converter according to an embodiment of the present invention, including:
a photovoltaic array 11 and an inverter 12. The inverter 12 includes a DC/DC conversion unit 13 and a DC/AC inversion unit 14 connected to an output end of the DC/DC conversion unit 13. The DC/DC conversion unit 13 of the inverter 12 is connected to an output end of the photovoltaic array 11. The inverter 12 is connected to a power grid at a grid-connected point. The grid-connected point is a point at which a photovoltaic power station is connected to the power grid. Specifically, for a photovoltaic power station with a booster station, the grid-connected point refers to a bus or a node on a high voltage side of the booster station; for a photovoltaic power station with no booster station, the grid-connected point refers to an output collection point of the photovoltaic power station.

The inverter 12 further includes a low voltage ride-through detection unit 15 and a low voltage ride-through control unit 16.

The low voltage ride-through detection unit 15 is configured to detect an amplitude of a voltage of the power grid at the grid-connected point, to determine whether to trigger low voltage ride-through. Specifically, the low voltage ride-through detection unit 15 determines, according to an amplitude value of a corresponding power grid voltage converted from a sine wave of an instantaneous value of an external power grid voltage, whether to trigger the low voltage ride-through; or may determine, by directly invoking an amplitude or phase value of a latest power grid voltage stored in a chip of the inverter, whether to trigger the low voltage ride-through. When the amplitude is less than a value specified in a standard, the low voltage ride-through is triggered. Alternatively, when the amplitude is less than a value specified in a standard, and phase asymmetry exceeds a particular preset range, the low voltage ride-through is triggered. In a case of a three-phase symmetrical dip or a single-phase-to-ground dip, the amplitude changes. In a case of a two-phase inter-phase dip, both the amplitude and the phase change.

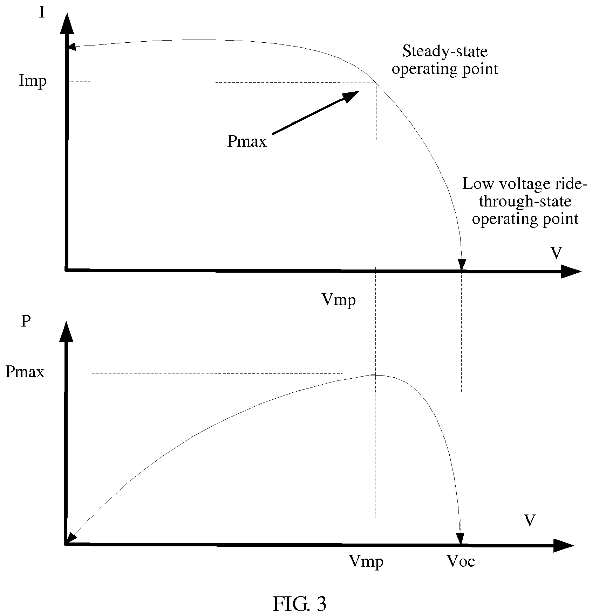

The low voltage ride-through control unit 16 is connected to the low voltage ride-through detection unit 15 and is configured to lower an input voltage of the DC/DC conversion unit when the low voltage ride-through detection unit determines to trigger the low voltage ride-through, to lower an output voltage of the photovoltaic array 11, so that the output voltage of the photovoltaic array 11 is less than a voltage of maximum power point tracking MPPT when the inverter operates in a steady state. Specifically, the maximum power point tracking refers to monitoring in real time a power-generation voltage of a solar panel of the photovoltaic array and tracking highest voltage and current values, so that the solar panel of the photovoltaic array operates at a maximum output power. The lowering an output voltage of the photovoltaic array 11 is to lower an output power, so that the output power is less than an output power when the inverter operates in the steady state. The lowering an output voltage of the photovoltaic array 11 includes invoking a control module of the DC/DC conversion unit by a digital signal processing chip DSP, to lower the input voltage of the DC/DC conversion unit, so as to lower the output voltage of the photovoltaic array. The DSP integrates devices such as a processor and a memory. The DC/DC conversion unit includes a boost circuit configured to increase a direct current voltage inputted to the DC/DC conversion unit. Using zero voltage ride-through, that is, an amplitude of a three-phase power grid voltage falling to 0%, as an example, when zero voltage ride-through occurs, an output power of the inverter is 0 kW because the power grid voltage is 0 V. In this case, a power on a PV side decreases from Pmax during steady-state operation to near 0 kW, so that the input voltage of the inverter increases from Vmp to near Voc. Referring to FIG. 3, FIG. 3 is a schematic diagram of changes in a power and a voltage of a photovoltaic array during low voltage ride-through. When the power grid voltage is normal, the output power of the photovoltaic array is an output power Pmax of a steady-state operating point shown in FIG. 3. When low voltage ride-through occurs, the output voltage of the photovoltaic array increases from a voltage value Vmp corresponding to the point with the output power Pmax to near a voltage value Voc according to characteristics of a relationship between the power and the voltage of the photovoltaic array. In this case, the power grid voltage approaches 0. In this case, the output power of the photovoltaic array decreases from Pmax during steady-state operation to near 0 kW, so that the input voltage of the inverter increases from Vmp to near the voltage value Voc. In this case, only the output power of the photovoltaic array is lowered, and the output voltage of the photovoltaic array is increased. In this embodiment, when low voltage ride-through occurs, the output voltage of the photovoltaic array is lowered by using a low voltage ride-through control module, so that the output voltage of the photovoltaic array is less than the voltage Vmp of maximum power point tracking when the inverter operates in the steady state, and the output power of the photovoltaic array is lowered.

Beneficial effects are as follows: In the low voltage ride-through control system for a multi-inverter grid-connected power converter that is provided in this embodiment, the output voltage of the photovoltaic array and the input and output voltages of the inverter are adjusted, so that the inverter can implement low voltage ride-through and can overcome a prior-art problem that a power converter is unstable because bus overvoltage protection or device damage is likely caused, and a prior-art problem that system costs are increased because a relatively large bus capacitance value is required. The method can effectively lower the bus capacitance value and enhance stability of low voltage ride-through.

Further, the low voltage ride-through control unit 16 is further configured to lower an output voltage of the DC/DC conversion unit 13 when the low voltage ride-through detection unit determines to trigger the low voltage ride-through, to lower an increase value of a voltage of a bus caused by an instantaneous increase in the voltage of the power grid after recovery from the low voltage ride-through, so as to protect a bus device or avoid triggering bus overvoltage protection, where the bus is configured to connect the DC/DC conversion unit and the DC/AC inversion unit, and the bus device is a device connected in series to the bus. Specifically, when a sudden increase in the voltage of the power grid leads to an increase in voltages of the DC/AC inversion unit and the DC/DC conversion unit, the low voltage control unit invokes a control module of the DC/AC inversion unit to lower the control module of an input voltage of the DC/AC inversion unit, so as to lower an increase level of a DC/DC output voltage, thereby controlling a voltage increase of the bus configured to connect the DC/DC conversion unit and the DC/AC inversion unit.

Further, that the low voltage ride-through control unit is further configured to lower an output voltage of the DC/DC conversion unit, to lower an increase value of a voltage of a bus caused by an instantaneous increase in the voltage of the power grid after recovery from the low voltage ride-through, so as to protect a bus device or avoid triggering bus overvoltage protection, where the bus is configured to connect the DC/DC conversion unit and the DC/AC inversion unit, includes: the low voltage ride-through control unit is specifically configured to: lower the input voltage of the DC/DC conversion unit, so as to lower the output voltage of the DC/DC conversion unit.

Further, that the low voltage ride-through control unit is further configured to lower an output voltage of the DC/DC conversion unit, to lower an increase value of a voltage of a bus caused by an instantaneous increase in the voltage of the power grid after recovery from the low voltage ride-through, so as to protect a bus device or avoid triggering bus overvoltage protection, where the bus is configured to connect the DC/DC conversion unit and the DC/AC inversion unit, includes: the low voltage ride-through control unit is specifically configured to:
set a voltage range for normal operation of the bus according to the voltage of maximum power point tracking when the inverter operates in the steady state and power grid voltage information, and control the increased voltage of the bus within the voltage range for normal operation of the bus.

Further, that the low voltage ride-through detection unit is configured to detect an amplitude of the voltage of the power grid at the grid-connected point, to determine whether to trigger low voltage ride-through includes: the low voltage ride-through detection unit is specifically configured to: detect the amplitude of the voltage of the power grid, and trigger the low voltage ride-through when a change in the amplitude exceeds a preset range or when changes in the amplitude and phase both exceed preset ranges.

FIG. 2 is a schematic diagram of a requirement on low voltage ride-through in a grid connection standard in China.

A longitudinal axis is a per unit value axis of a power grid voltage, and is used to identify a dip status of the power grid voltage when low voltage ride-through occurs. A per unit value of the power grid voltage is a current actual value of the power grid voltage or a rated power grid voltage value.

A horizontal axis is a time axis and identifies a time for which the inverter needs to maintain normal grid connection when a power grid voltage dip occurs.

FIG. 3 is a schematic diagram of changes in a current, a voltage, and a power of a photovoltaic array during low voltage ride-through.

When the power grid voltage is normal, the output power of the photovoltaic array is an output power Pmax of a steady-state operating point shown in FIG. 3. When low voltage ride-through occurs, the output voltage of the photovoltaic array increases from a voltage value Vmp corresponding to the point with the output power Pmax to near a voltage value Voc according to characteristics of a relationship between the power and the voltage of the photovoltaic array. In this case, the power grid voltage approaches 0. In this case, the output power of the photovoltaic array decreases from Pmax during steady-state operation to near 0 kW, so that the input voltage of the inverter increases from Vmp to near the voltage value Voc. In this case, only the output power of the photovoltaic array is lowered, and the output voltage of the photovoltaic array is increased.

In the present invention, when low voltage ride-through occurs, the output voltage of the photovoltaic array is lowered by using a low voltage ride-through control module, so that the output voltage of the photovoltaic array is less than the voltage Vmp of maximum power point tracking when the inverter operates in the steady state, and the output power of the photovoltaic array is lowered.

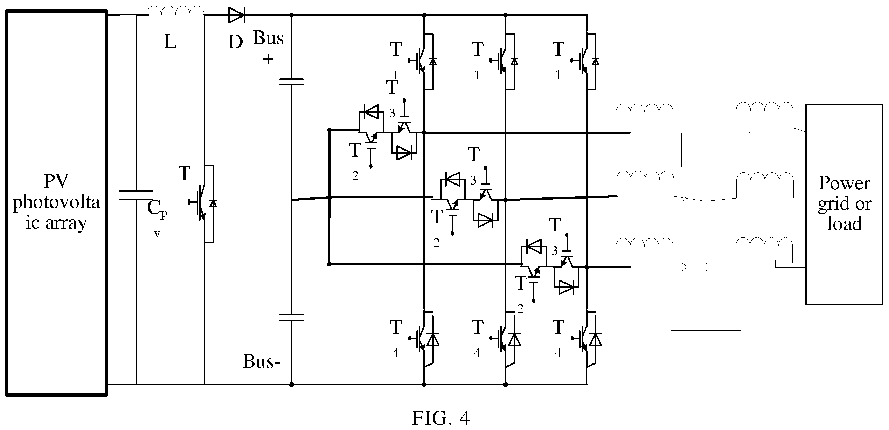

FIG. 4 is a circuit diagram of a low voltage ride-through control system for a multi-inverter grid-connected power converter according to an embodiment of the present invention, including:
a photovoltaic array and an inverter. The inverter includes a DC/DC conversion unit and a DC/AC inversion unit. The DC/DC conversion unit is connected to an output end of the photovoltaic array. The inverter is connected to a power grid at a grid-connected point. The DC/DC conversion unit includes:
a capacitor Cₚᵥ, a switching transistor T, and an inductor L. The BUS is a bus that connects the DC/DC conversion unit and the DC/AC inversion unit. A bus device may be connected on the bus, and the bus device may be a capacitor. The inverter further includes a low voltage ride-through detection unit and a low voltage ride-through control unit. The low voltage ride-through detection unit and the low voltage ride-through control unit are stored and run in a chip of the inverter and are not marked on this circuit topology diagram.

The low voltage ride-through detection unit is configured to detect an amplitude or a phase of a voltage of the power grid at the grid-connected point, to determine whether to trigger low voltage ride-through.

The low voltage ride-through control unit is connected to the low voltage ride-through detection unit and is configured to lower an output voltage of the photovoltaic array when the low voltage ride-through detection unit determines to trigger the low voltage ride-through, so that the output voltage of the photovoltaic array is less than a voltage of maximum power point tracking when the inverter operates in a steady state. The low voltage ride-through control unit is further configured to lower an output voltage of the DC/DC conversion unit, to lower an increase value of a voltage of a bus caused by an instantaneous increase in the voltage of the power grid after recovery from the low voltage ride-through, so as to protect a bus device or avoid triggering bus overvoltage protection, where the bus is configured to connect the DC/DC conversion unit and the DC/AC inversion unit, and the bus device is a device connected in series to the bus.

The foregoing control performed by the low voltage ride-through detection unit and the low voltage ride-through control unit does not change working principles of devices of this circuit when an original power grid voltage is normal, and only the output voltage of the photovoltaic array and the input voltage and the output voltage of the inverter are controlled, so as to implement low voltage ride-through and ensure normal operation of the bus and a bus container.

FIG. 4 is a T-type three-level inverter topology, which implements energy conversion from a solar cell DC to a power grid AC by controlling on and off of a switching transistor thereof and is a topological structure with a promising application prospect in solar photovoltaic power generation systems.

The present invention is applicable to a single-inverter system or a multi-inverter parallel system; is applicable to a three-phase T-type or I-type three-level inverter, and also applicable to a three-phase T-type or I-type multi-level inverter; and is applicable to parallel systems with different architecture forms such as a modular form and a tower form.

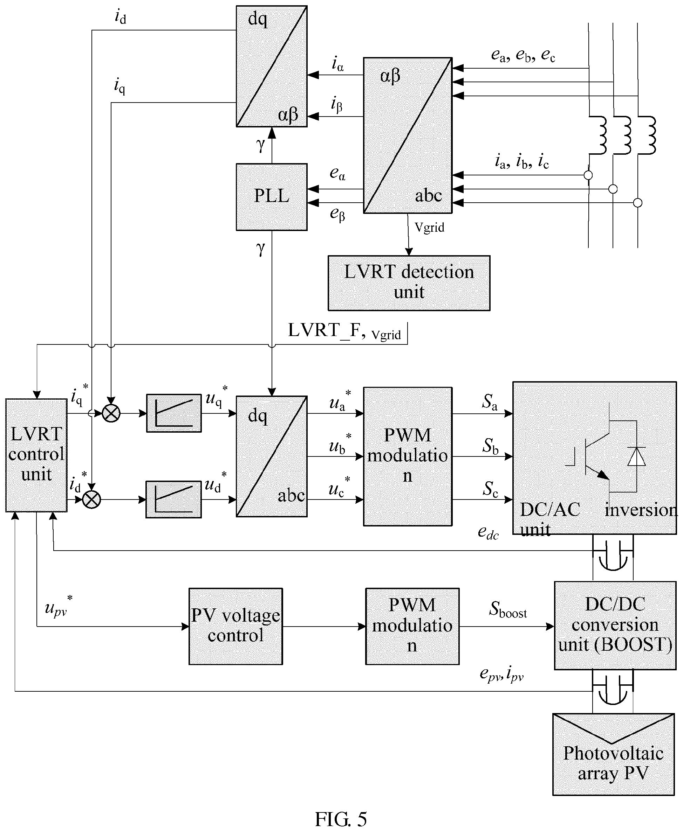

Referring to FIG. 5, FIG. 5 is a control block diagram of a low voltage ride-through control system for a multi-inverter grid-connected power converter according to an embodiment of the present invention.

In grid connection control of inverters, three-phase alternating current information, such as power grid voltages (*eₐ*, *e_{b}*, *e_{c}*) and grid-connected currents (*iₐ*, *i_{b}*, *i_{c}*), is obtained by means of analog-to-digital AD conversion sampling. A phase angle *γ* of the power grid voltage and components *i_{d}* and *i_{q}* of the grid-connected current under a *dq* coordinate axis are obtained by means of coordinate conversion and power grid phase locking and are used as feedback values of an active current and a reactive current in grid-connected current control to participate in grid connection control.

Low voltage ride-through (LVRT) includes an LVRT detection unit and an LVRT control unit. The LVRT detection unit performs real-time calculation on amplitude and phase statuses of the power grid voltage obtained by means of AD sampling, and performs rapid detection after applying a positive and negative sequence separation algorithm, to determine whether to trigger low voltage ride-through. Specifically, the LVRT detection unit determines, according to an amplitude or phase value of a corresponding power grid voltage converted from a sine wave of an instantaneous value of an external power grid voltage, whether to trigger the low voltage ride-through. Alternatively, the LVRT detection unit may determine, by directly invoking an amplitude or phase value of a latest power grid voltage stored in a chip of the inverter, whether to trigger the low voltage ride-through. When the amplitude is less than a value specified in a standard, or phase asymmetry exceeds a particular preset range, the low voltage ride-through is triggered. Alternatively, when the amplitude is less than a value specified in a standard, and phase asymmetry exceeds a particular preset range, the low voltage ride-through is triggered. In a case of a three-phase symmetrical dip or a single-phase-to-ground dip, the amplitude changes. In a case of a two-phase inter-phase dip, both the amplitude and the phase change.

When low voltage ride-through occurs, an input power of the power grid decreases, and the output power of the photovoltaic array 11 is relatively high, leading to an increase in the voltage of the inverter and an increase in the voltage of the bus that connects the DC/DC conversion unit and the DC/AC inversion unit. The digital signal processing chip DSP invokes the control module of the DC/DC conversion unit, to lower the input voltage of the DC/DC conversion unit, so as to lower the output voltage of the photovoltaic array, thereby lowering the output power of the photovoltaic array, so that the output power is less than the output power when the inverter operates in the steady state. The DSP integrates devices such as a processor and a memory. When the power grid voltage recovers, there is a sudden voltage increase, and the photovoltaic array is in a power output state during low voltage ride-through. In this case, because the output power of the photovoltaic array is relatively low, and the power on the power grid side is relatively high, there is a power mismatch, leading to an increase in the voltage of the inverter and charging of bus capacitance. Therefore, in the case of low voltage ride-through before the power grid voltage recovers, the low voltage control unit invokes the control module of the DC/AC inversion unit, to lower the input voltage of the DC/AC inversion unit, so as to lower an increase level of the DC/DC output voltage, thereby controlling a voltage increase of the bus configured to connect the DC/DC conversion unit and the DC/AC inversion unit. Specifically, the LVRT control unit calculates, by using a detection result of the LVRT detection unit, active and reactive current instruction values according to a current power grid voltage dip depth and controls an operating status of the inverter by controlling an on/off time of the switching transistor, thereby controlling active and reactive currents during low voltage ride-through.

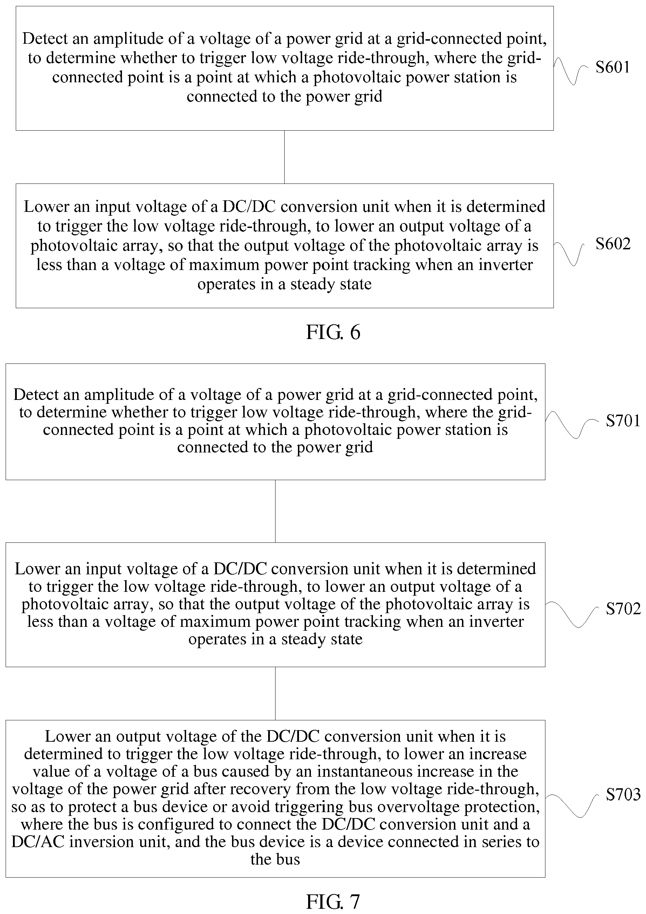

FIG. 6 is a flowchart of a low voltage ride-through control method for a multi-inverter grid-connected power converter according to an embodiment of the present invention. The method includes the following steps.

Step S601: Detect an amplitude of a voltage of a power grid at a grid-connected point, to determine whether to trigger low voltage ride-through, where the grid-connected point is a point at which a photovoltaic power station is connected to the power grid. Specifically, for a photovoltaic power station with a booster station, the grid-connected point refers to a bus or a node on a high voltage side of the booster station; for a photovoltaic power station with no booster station, the grid-connected point refers to an output collection point of the photovoltaic power station. The detecting an amplitude of a voltage of a power grid at a grid-connected point, to determine whether to trigger low voltage ride-through specifically includes: determining, according to an amplitude value of a corresponding power grid voltage converted from a sine wave of an instantaneous value of an external power grid voltage, whether to trigger the low voltage ride-through; or determining, by directly invoking an amplitude or phase value of a latest power grid voltage stored in a chip of an inverter, whether to trigger the low voltage ride-through. When the amplitude is less than a value specified in a standard, the low voltage ride-through is triggered. Alternatively, when the amplitude is less than a value specified in a standard, and phase asymmetry exceeds a particular preset range, the low voltage ride-through is triggered. In a case of a three-phase symmetrical dip or a single-phase-to-ground dip, the amplitude changes. In a case of a two-phase inter-phase dip, both the amplitude and the phase change.

Step S602: Lower an output voltage of a photovoltaic array by lowering an input voltage of a DC/DC conversion unit when it is determined to trigger the low voltage ride-through, so that the output voltage of the photovoltaic array is less than a voltage of maximum power point tracking when the inverter operates in a steady state. Specifically, the maximum power point tracking refers to monitoring in real time a power-generation voltage of a solar panel of the photovoltaic array and tracking highest voltage and current values, so that the solar panel of the photovoltaic array operates at a maximum output power. The lowering an output voltage of a photovoltaic array 11 is to lower an output power, so that the output power is less than an output power when the inverter operates in the steady state. The lowering an output voltage of a photovoltaic array 11 includes invoking a control module of the DC/DC conversion unit by a digital signal processing chip DSP, to lower the input voltage of the DC/DC conversion unit, so as to lower the output voltage of the photovoltaic array. The DSP integrates devices such as a processor and a memory. The DC/DC conversion unit includes a boost circuit configured to increase a direct current voltage inputted to the DC/DC conversion unit.

Beneficial effects are as follows: In the low voltage ride-through control method for a multi-inverter grid-connected power converter that is provided in this embodiment, the output voltage of the photovoltaic array and the input and output voltages of the inverter are adjusted, so that the inverter can implement low voltage ride-through and can overcome a prior-art problem that a power converter is unstable because bus overvoltage protection or device damage is likely caused. The method can effectively lower the bus capacitance value and enhance stability of low voltage ride-through.

Further, step S603: The lowering an output voltage of the DC/DC conversion unit, to lower an increase value of a voltage of a bus caused by an instantaneous increase in the voltage of the power grid after recovery from the low voltage ride-through, so as to protect a bus device or avoid triggering bus overvoltage protection, where the bus is configured to connect the DC/DC conversion unit and a DC/AC inversion unit, and the bus device is a device connected in series to the bus, specifically includes:
lowering the input voltage of the DC/DC conversion unit, so as to lower the output voltage of the DC/DC conversion unit, to lower the increase value of the voltage of the bus caused by the instantaneous increase in the voltage of the power grid after recovery from the low voltage ride-through, so as to protect the bus device or avoid triggering bus overvoltage protection, where the bus is configured to connect the DC/DC conversion unit and the DC/AC inversion unit, and the bus device is a device connected in series to the bus.

Further, step S604: The lowering an output voltage of the DC/DC conversion unit, to lower an increase value of a voltage of a bus caused by an instantaneous increase in the voltage of the power grid after recovery from the low voltage ride-through, so as to protect a bus device or avoid triggering bus overvoltage protection, where the bus is configured to connect the DC/DC conversion unit and a DC/AC inversion unit, and the bus device is a device connected in series to the bus, specifically includes:
setting a voltage range for normal operation of the bus according to the voltage of maximum power point tracking when the inverter operates in the steady state and power grid voltage information, and controlling the increased voltage of the bus within the voltage range for normal operation of the bus.

Further, step S605: The detecting an amplitude of a voltage of a power grid at a grid-connected point, to determine whether to trigger low voltage ride-through specifically includes: detecting the amplitude of the voltage of the power grid at the grid-connected point, and triggering the low voltage ride-through when a change in the amplitude exceeds a preset range or when changes in the amplitude or a phase both exceed preset ranges.

FIG. 7 is a flowchart of another low voltage ride-through control method for a multi-inverter grid-connected power converter according to an embodiment of the present invention. The method includes the following steps.

Step S701: Detect an amplitude of a voltage of a power grid at a grid-connected point, to determine whether to trigger low voltage ride-through, where the grid-connected point is a bus or a node on a high voltage side of a booster station of a photovoltaic power station or is an output collection point of a photovoltaic power station. Specifically, for a photovoltaic power station with a booster station, the grid-connected point refers to a bus or a node on a high voltage side of the booster station; for a photovoltaic power station with no booster station, the grid-connected point refers to an output collection point of the photovoltaic power station. The detecting an amplitude of a voltage of a power grid at a grid-connected point, to determine whether to trigger low voltage ride-through specifically includes: determining, according to an amplitude value of a corresponding power grid voltage converted from a sine wave of an instantaneous value of an external power grid voltage, whether to trigger the low voltage ride-through; or determining, by directly invoking an amplitude or phase value of a latest power grid voltage stored in a chip of an inverter, whether to trigger the low voltage ride-through. When the amplitude is less than a value specified in a standard, the low voltage ride-through is triggered. Alternatively, when the amplitude is less than a value specified in a standard, and phase asymmetry exceeds a particular preset range, the low voltage ride-through is triggered. In a case of a three-phase symmetrical dip or a single-phase-to-ground dip, the amplitude changes. In a case of a two-phase inter-phase dip, both the amplitude and the phase change.

Step 702: Lower an output voltage of a photovoltaic array by lowering an input voltage of a DC/DC conversion unit when it is determined to trigger the low voltage ride-through, so that the output voltage of the photovoltaic array is less than a voltage of maximum power point tracking when the inverter operates in a steady state. Specifically, the maximum power point tracking refers to monitoring in real time a power-generation voltage of a solar panel of the photovoltaic array and tracking highest voltage and current values, so that the solar panel of the photovoltaic array operates at a maximum output power. The lowering an output voltage of a photovoltaic array 11 is to lower an output power, so that the output power is less than an output power when the inverter operates in the steady state. The lowering an output voltage of a photovoltaic array 11 includes invoking a control module of the DC/DC conversion unit by a digital signal processing chip DSP, to lower the input voltage of the DC/DC conversion unit, so as to lower the output voltage of the photovoltaic array. The DSP integrates devices such as a processor and a memory. The DC/DC conversion unit includes a boost circuit configured to increase a direct current voltage inputted to the DC/DC conversion unit.

Step 703: Lower an output voltage of the DC/DC conversion unit, to lower an increase value of a voltage of a bus caused by an instantaneous increase in the voltage of the power grid after recovery from the low voltage ride-through, so as to protect a bus device or avoid triggering bus overvoltage protection, where the bus is configured to connect the DC/DC conversion unit and a DC/AC inversion unit, and the bus device is a device connected in series to the bus. Specifically, when a sudden increase in the voltage of the power grid leads to an increase in voltages of the DC/AC inversion unit and the DC/DC conversion unit, a low voltage control unit invokes a control module of the DC/AC inversion unit to lower the control module of an input voltage of the DC/AC inversion unit, so as to lower an increase level of the output voltage of the DC/DC conversion unit, thereby controlling a voltage increase of the bus configured to connect the DC/DC conversion unit and the DC/AC inversion unit.

Beneficial effects are as follows: In the low voltage ride-through control method for a multi-inverter grid-connected power converter that is provided in this embodiment, the output voltage of the inverter is adjusted, so that the inverter can implement low voltage ride-through and can overcome a prior-art problem that a power converter is unstable because bus overvoltage protection or device damage is likely caused, and a prior-art problem that system costs are increased because a relatively large bus capacitance value is required. The method can effectively lower the bus capacitance value and enhance stability of low voltage ride-through.

Further, step S704: The lowering an output voltage of the DC/DC conversion unit, to lower an increase value of a voltage of a bus caused by an instantaneous increase in the voltage of the power grid after recovery from the low voltage ride-through, so as to protect a bus device or avoid triggering bus overvoltage protection, where the bus is configured to connect the DC/DC conversion unit and a DC/AC inversion unit, and the bus device is a device connected in series to the bus, specifically includes:
lowering the input voltage of the DC/DC conversion unit, so as to lower the output voltage of the DC/DC conversion unit, to lower the increase value of the voltage of the bus caused by the instantaneous increase in the voltage of the power grid after recovery from the low voltage ride-through, so as to protect the bus device or avoid triggering bus overvoltage protection, where the bus is configured to connect the DC/DC conversion unit and the DC/AC inversion unit, and the bus device is a device connected in series to the bus.

Further, step S705: The lowering an output voltage of the DC/DC conversion unit, to lower an increase value of a voltage of a bus caused by an instantaneous increase in the voltage of the power grid after recovery from the low voltage ride-through, so as to protect a bus device or avoid triggering bus overvoltage protection, where the bus is configured to connect the DC/DC conversion unit and a DC/AC inversion unit, and the bus device is a device connected in series to the bus, specifically includes:
setting a voltage range for normal operation of the bus according to the voltage of maximum power point tracking when the inverter operates in the steady state and power grid voltage information, and controlling the increased voltage of the bus within the voltage range for normal operation of the bus.

Further, step S706: The detecting an amplitude of a voltage of a power grid at a grid-connected point, to determine whether to trigger low voltage ride-through specifically includes: detecting the amplitude of the voltage of the power grid at the grid-connected point, and triggering the low voltage ride-through when a change in the amplitude exceeds a preset range or when changes in the amplitude or a phase both exceed preset ranges.

Beneficial effects are as follows: In the low voltage ride-through control method for a multi-inverter grid-connected power converter that is provided in this embodiment, the output voltage of the inverter is adjusted, so that the inverter can implement low voltage ride-through and can overcome a prior-art problem that a power converter is unstable because bus overvoltage protection or device damage is likely caused, and a prior-art problem that system costs are increased because a relatively large bus capacitance value is required. The method can effectively lower the bus capacitance value and enhance stability of low voltage ride-through.

The present invention may be implemented in a plurality of implementation manners. The embodiments of the present invention may be executed by a specific software or hardware component. Persons skilled in the art consider that different software or hardware combinations may also be applied to execute the embodiments of the present invention, and that the specific operations executed by hardware may also be implemented by software.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. A low voltage ride-through control system for a multi-inverter grid-connected power converter, comprising: a photovoltaic array and an inverter, wherein the inverter comprises a DC/DC conversion unit and a DC/AC inversion unit connected to an output end of the DC/DC conversion unit, an input end of the DC/DC conversion unit is connected to an output end of the photovoltaic array, the inverter is connected to a power grid at a grid-connected point, and the grid-connected point is a point at which a photovoltaic power station is connected to the power grid; and
the inverter further comprises a low voltage ride-through detection unit and a low voltage ride-through control unit, wherein
the low voltage ride-through detection unit is configured to detect an amplitude of a voltage of the power grid at the grid-connected point, to determine whether to trigger low voltage ride-through; and
the low voltage ride-through control unit is connected to the low voltage ride-through detection unit and is configured to lower an input voltage of the DC/DC conversion unit when the low voltage ride-through detection unit determines to trigger the low voltage ride-through, to lower an output voltage of the photovoltaic array, so that the output voltage of the photovoltaic array is less than a voltage of maximum power point tracking when the inverter operates in a steady state.

2. The system according to claim 1, wherein the low voltage ride-through control unit is further configured to lower an output voltage of the DC/DC conversion unit when the low voltage ride-through detection unit determines to trigger the low voltage ride-through, to lower an increase value of a voltage of a bus caused by an instantaneous increase in the voltage of the power grid after recovery from the low voltage ride-through, so as to protect a bus device or avoid triggering bus overvoltage protection, wherein the bus is configured to connect the DC/DC conversion unit and the DC/AC inversion unit, and the bus device is a device connected in series to the bus.

3. The system according to claim 2, wherein that the low voltage ride-through control unit is further configured to lower an output voltage of the DC/DC conversion unit when the low voltage ride-through detection unit determines to trigger the low voltage ride-through comprises: the low voltage ride-through control unit is specifically configured to:
lower the input voltage of the DC/DC conversion unit, so as to lower the output voltage of the DC/DC conversion unit.

4. The system according to claim 2 or 3, wherein that the low voltage ride-through control unit is further configured to lower an output voltage of the DC/DC conversion unit, to lower an increase value of a voltage of a bus caused by an instantaneous increase in the voltage of the power grid after recovery from the low voltage ride-through, so as to protect a bus device or avoid triggering bus overvoltage protection, wherein the bus is configured to connect the DC/DC conversion unit and the DC/AC inversion unit, comprises: the low voltage ride-through control unit is specifically configured to:
set a voltage range for normal operation of the bus according to the voltage of maximum power point tracking when the inverter operates in the steady state and power grid voltage information, and control the increased voltage of the bus within the voltage range for normal operation of the bus.

5. The system according to any one of claims 1 to 4, wherein that the low voltage ride-through detection unit is configured to detect an amplitude of a voltage of the power grid at the grid-connected point, to determine whether to trigger low voltage ride-through comprises: the low voltage ride-through detection unit is specifically configured to:
detect the amplitude of the voltage of the power grid, and trigger the low voltage ride-through when a change in the amplitude exceeds a preset range.

6. A low voltage ride-through control method for a multi-inverter grid-connected power converter, comprising:
detecting an amplitude or a phase of a voltage of a power grid at a grid-connected point, to determine whether to trigger low voltage ride-through, wherein the grid-connected point is a point at which a photovoltaic power station is connected to the power grid; and
lowering an input voltage of a DC/DC conversion unit when it is determined to trigger the low voltage ride-through, to lower an output voltage of a photovoltaic array, so that the output voltage of the photovoltaic array is less than a voltage of maximum power point tracking when an inverter operates in a steady state.

7. The method according to claim 6, further comprising:
lowering an output voltage of the DC/DC conversion unit when it is determined to trigger the low voltage ride-through, to lower an increase value of a voltage of a bus caused by an instantaneous increase in the voltage of the power grid after recovery from the low voltage ride-through, so as to protect a bus device or avoid triggering bus overvoltage protection, wherein the bus is configured to connect the DC/DC conversion unit and a DC/AC inversion unit, and the bus device is a device connected in series to the bus.

8. The method according to claim 7, wherein the lowering an output voltage of the DC/DC conversion unit specifically comprises:
lowering the input voltage of the DC/DC conversion unit, so as to lower the output voltage of the DC/DC conversion unit.

9. The method according to claim 7 or 8, wherein the lowering an output voltage of the DC/DC conversion unit, to lower an increase value of a voltage of a bus caused by an instantaneous increase in the voltage of the power grid after recovery from the low voltage ride-through, so as to protect a bus device or avoid triggering bus overvoltage protection, wherein the bus is configured to connect the DC/DC conversion unit and a DC/AC inversion unit, and the bus device is a device connected in series to the bus, specifically comprises:
setting a voltage range for normal operation of the bus according to the voltage of maximum power point tracking when the inverter operates in the steady state and power grid voltage information, and controlling the voltage of the bus within the voltage range for normal operation of the bus.

10. The method according to any one of claims 6 to 9, wherein the detecting an amplitude of a voltage of a power grid at a grid-connected point, to determine whether to trigger low voltage ride-through specifically comprises:
detecting the amplitude of the voltage of the power grid at the grid-connected point, and triggering the low voltage ride-through when a change in the amplitude exceeds a preset range.
